# EUROPÄISCHE PATENTSCHRIFT

(11) **EP 0 422 388 B1**
(45) Veröffentlichungstag und Bekanntmachung des Hinweises auf die Patenterteilung: **15.03.1995**
(21) Anmeldenummer: 90117083.7
(22) Anmeldetag: 05.09.1990
(51) Int. Cl.: E05F 15/00

(54) **Schaltvorrichtung für elektromotorisch angetriebene Schliessteile von Kraftfahhrzeugen**
Circuit for electrically powered closing parts of motor vehicles
Circuit pour éléments à fermer, entraînés par un moteur électrique de véhicules automobiles

(30) Priorität: 08.09.1989 DE 3929986
(43) Veröffentlichungstag der Anmeldung: 17.04.1991
(73) Patentinhaber: Bayerische Motoren Werke Aktiengesellschaft, 80788 München (DE)
(72) Erfinder: Wagner, Armin, D-8031 Gernlinden (DE)

(56) Entgegenhaltungen:
- EP-A- 0 187 353
- DE-A- 3 150 693
- DE-A- 3 433 204
- GB-A- 2 010 957
- GB-A- 2 053 513

## Beschreibung

Die Erfindung bezieht sich auf eine Schaltvorrichtung nach dem Oberbegriff des Patentanspruchs 1.

Eine derartige Schaltvorrichtung ist aus der JP 60055190 A bekannt. Dabei wird lediglich das vom Antriebsmotor abgegebene Drehmoment überwacht und das Schließteil dann stillgesetzt, wenn dieses Drehmoment einen vorgegebenen Grenzwert überschreitet. Bei einer derartigen Schaltvorrichtung besteht wie generell auch bei anderen bekannten Einklemmschutzeinrichtungen (DE-OS 34 33 204, DE-OS 31 50 693 usw.) das Problem, zwischen dem tatsächlichen Einklemmfall und einem beispielsweise durch Temperatur- oder Fertigungseinflüsse bedingten kurzzeitigen Bewegungswiderstand für das Schließteil zu unterscheiden. Derartige unregelmäßige Änderungen der Reibungswerte der Mechanik und das als Stick-Slip-Effekt bekannte Rucken der Scheibe führt zum Auslösen des Einklemmschutzes. Dies kann durch Erhöhung der Auslöseschwellen beseitigt werden, hat aber zur Folge, daß die gesetzlich vorgeschriebenen maximal zulässigen Einklemmkräfte überschritten werden können.

Ferner ist aus der GB 20 10 957 A und der GB 20 53 513 A in diesem Zusammenhang bekannt, den Erregerstrom des Antriebsmotors zu überwachen. Dabei wird die erste Ableitung und/oder das Integral des Motorstroms in dem Zeitverhalten überwacht und bei Überschreiten eines vorgegebenen Grenzwertes der Antriebsmotor stillgesetzt. Bedingt durch Änderungen der Betriebsspannung des Antriebsmotors, wie sie bei Ein- und Ausschalten von Stromverbrauchern zwangsläufig auftreten, ergibt sich ein Zielkonflikt, da nicht erkennbar ist, ob die Änderung des Erregerstroms auf einen eingeklemmten Gegenstand in der Bewegungsbahn des Schließteils oder die Schaltung eines sonstigen Verbrauchers zurückzuführen ist. Somit aber sind die genannten Schaltvorrichtungen nicht geeignet, einen wirksamen Einklemmschutz zu gewährleisten.

Der Erfindung liegt die Aufgabe zugrunde, eine Schaltvorrichtung der eingangs genannten Art zu schaffen, die mit schaltungstechnischen einfachen Mitteln einen wirksamen Einklemmschutz des Schließteiles gewährleistet.

Die Erfindung löst diese Aufgabe durch die kennzeichnenden Merkmale des Patentanspruchs 1.

Im Gegensatz zu der eingangs genannten bekannten Schaltvorrichtung wird nun nicht mehr der momentane Wert des Drehmoments oder wie bei einem auf dem Markt erhältlichen Kraftfahrzeug allein die zeitliche Änderung des Drehmoments bezogen auf einen unmittelbar vorhergehenden Wert dieses Moment als Kriterium für das Auslösen des Einklemmschutzes verwandt, sondern es wird eine historische Betrachtung über einen definierten Stellweg vorgenommen. Diese Historie bezieht sich auf das Verhalten und den Verlauf der ersten Ableitung des Drehmoments.

Diese zeigt im Einklemmfalle ein Verhalten, das sich deutlich von dem bei unregelmäßiger bzw. lokaler Änderungen der Reibungswerte der Mechanik oder auch dem Rucken des Schließteiles unterscheidet. Im Einklemmfalle nimmt das Drehmoment bis hin zu dem ohne Einklemmschutz auftretenden vollständigen Blockieren des Schließteils gleichmäßig und stark zu, während sich anderenfalls lediglich kurzzeitige Spitzen des Drehmoments mit tendenziell wechselnden Änderungen abzeichnen.

Vorteilhafte Ausgestaltungen der Erfindung sind Gegenstand der Patentansprüche 2 und 3. Dabei zeigt Patentanspruch
2 eine Möglichkeit, die Drehmoment-Werte in regelmäßigen räumlichen Abständen und auf besonders einfache Weise ohne besonderen Drehmomentgeber zu bestimmen.
3 ein Mittel, starke und vorübergehende, in der Regel durch das Einschalten von Verbrauchern bedingte, Schwankungen der Bordnetzspannung zu berücksichtigen.

Die Erfindung ist anhand von zwei Diagrammen weiter erläutert. Es zeigt
- Diagramm (1): den Zusammenhang zwischen Drehzahl und Drehmoment und
- Diagramm (2): den Drehmomentverlauf im Falle eines Einklemmens und vorübergehender Bewegungsstörungen.

Das Diagramm (1) zeigt den Zusammenhang zwischen der Drehzahl und dem Drehmoment in Abhängigkeit von der jeweiligen Bordnetzspannung U. Diese ist als Variable angegeben. Aus dem Diagramm ergibt sich, daß ein unmittelbarer Zusammenhang zwischen der Drehzahl und dem Drehmoment besteht und daher das Drehmoment aufgrund der Drehzahl des in der Regel als permanenterregter Elektromotor ausgebildeten Antriebsmotors bestimmt werden kann.

Hierzu ist beispielsweise an der Ausgangswelle ein Drehzahlgeber vorgesehen, der an sich bekannt ist und der neben der Drehzahl auch die Drehrichtung bestimmt. Damit ist es möglich, beim Schließen des Schließteils auch das jeweilige Drehmoment zu bestimmen. Die Drehzahl ihrerseits kann beispielsweise mit Hilfe eines Inkrementgebers gewonnen werden, der bei jeder Umdrehung des Antriebsmotors einen Impuls abgibt. Die Zeit zwischen zwei aufeinanderfolgenden Impulsen ermöglicht somit eine Bestimmung der Drehzahl und damit des Drehmoments des Antriebsmotors. Jede Umdrehung des Antriebsmotors ihrerseits entspricht einem bestimmten Weg des Schließteils. Im Rahmen der Erfindung ist dieser Weg ausreichend klein, um auch bei einer Berücksichtigung der Vorgeschichte des Drehmoments über einen ausreichend langen Weg das Schließteil im Einklemmfall sicher und rechtzeitig anhalten zu können.

Antriebsmotore für Schließteile bei Kraftfahrzeugen, wie Fenster, Türen und Schiebe-Hebedächern geben, abgesehen von der Anfangsbeschleunigung und dem Einlauf in die Dichtung konstante oder sich nur gering über den Bewegungsbereich s ändernde Drehmomente ab. Jedoch ändert sich das abgegebene Drehmoment M bei einer Einklemmsituation rasch und in einer Richtung, die durch eine Vergrößerung der Drehmoments gekennzeichnet ist.

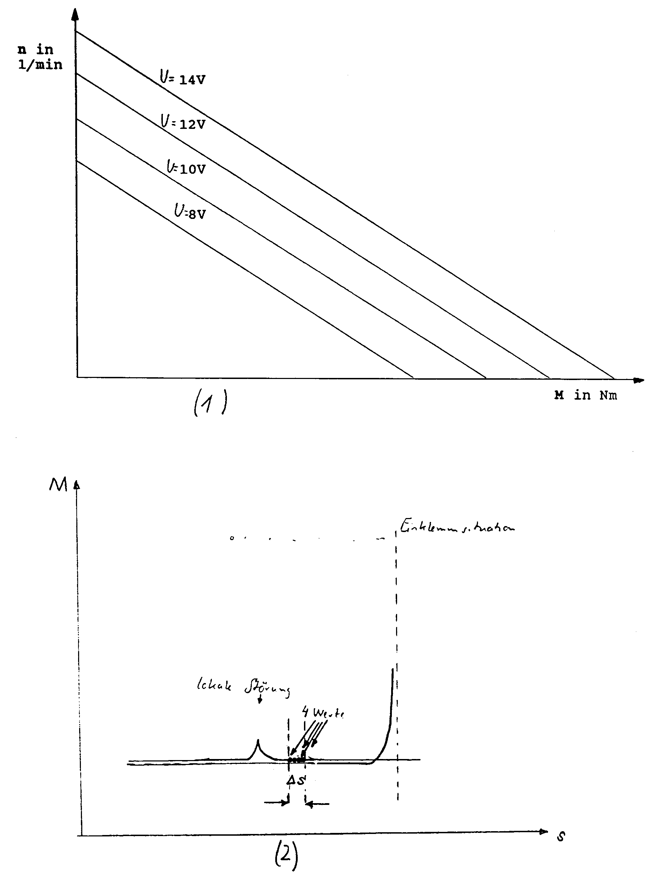

Ein derartiger Drehmomentverlauf ist im Diagramm (2) gezeigt. Im Gegensatz dazu kommt es bei mechanischen Unregelmäßigkeiten zu einem Drehmomentverlauf, der im Diagramm 2 ebenfalls gezeigt ist und der sich durch eine lokale und nur über einen kurzen Stellweg auftretende Spitze mit sich wieder verringerndem Drehmoment nach Durchlaufen des Spitzenwertes auszeichnet. Diese Spitze kann beispielsweise den Wert des üblicherweise abgegebenen Drehmoments um 25% übersteigen.

Die Erfindung geht von den unterschiedlichen Drehmomentverläufen aus, wie sie sich aus dem Diagramm 2 ergeben. Es wird nach jede Umdrehung des Antriebsmotors das aktuell abgegebene Drehmoment berechnet und in einem Ringpuffer (nicht dargestellt) abgespeichert. Somit sind für den letzten durchlaufenden Bewegungsbereich Δs von beispielsweise 10 bis 30 mm die abgegebenen Drehmomente gespeichert. Die Größe des Ringpuffers kann an den jeweiligen Einsatzfall angepaßt werden.

Die Betriebsspannungsabhängigkeit des Kennfeldes dient dazu, den Grenzwert an Änderungen der Bordnetzspannung des Grenzwert anzupassen. Damit wird verhindert, daß das Einschalten von zusätzlichen Verbrauchern zur Fehlauslösung des Einklemmschutzes führt.

Damit ist es möglich, für verschiedene Einsatzfälle und angepaßt an die jeweiligen Bordnetzverhältnisse einen sicheren und zuverlässigen Einklemmschutz zu realisieren.

## Patentansprüche

1. Schaltvorrichtung für elektromotorisch angetriebene Schließteile von Kraftfahrzeugen mit einer Überwachungseinrichtung, die das vom Antriebsmotor angegebene Drehmoment überprüft und bei Überschreiten eines Grenzwertes den Antriebsmotor abschaltet, dadurch gekennzeichnet, daß über einen definierten gegenüber dem gesamten Bewegungsbereich des Schließteils wesentlich kleineren Stellweg des Schließteils eine historische Betrachtung des Verlaufs und des Verhaltens der ersten Ableitung des Drehmoments vorgenommen und eine Unterscheidung von für eine Reibungsänderung charakteristischen kurzzeitigen Spitzen des Drehmoments und eines Einklemmfalls des Schließteils ermöglicht ist.

2. Schaltvorrichtung nach Anspruch 1, dadurch gekennzeichnet, daß der Drehmoment-Wert aus der momentanen Drehzahl und der Betriebsspannung des Antriebsmotors abgeleitet ist.

3. Schaltvorrichtung nach einem der Ansprüche 1 oder 2, dadurch gekennzeichnet, daß der Grenzwert bei einer starken Verringerung der Bordnetzspannung erhöht ist.

## Claims

1. A circuit for electrically-driven closing parts of motor vehicles, comprising a monitoring means which monitors the torque delivered by the driving motor and switches the motor off if a limiting value is exceeded, characterised in that a historical observation of the shape and behaviour of the first derivative of the torque is made during a defined travel distance of the closing part, which is substantially smaller than the total range of travel thereof, in order to distinguish between jamming of the closing part and brief peaks in torque characteristic of a change in friction.

2. A circuit according to claim 1, characterised in that the measurement of torque is derived from the instantaneous speed and the operating voltage of the driving motor.

3. A circuit according to claim 1 or 2, characterised in that the limiting value is increased if there is a considerable reduction in the vehicle supply voltage.

## Revendications

1. Circuit pour des éléments de fermeture à moteur électrique de véhicules automobiles comprenant une installation de surveillance qui vérifie le couple fourni par le moteur et en cas de dépassement d'une valeur limite, coupe le moteur, caractérisé en ce que par une course de réglage beaucoup plus petite de l'élément de fermeture, définie par rapport à l'ensemble de la plage de déplacement de l'élément de fermeture, on effectue une évaluation historique de la courbe et du comportement de la dérivée première du couple et il est possible de distinguer entre des pointes de courte durée du couple, caractéristiques à une variation de coefficient de frottement et un cas de pincement de l'élément de fermeture.

2. Circuit selon la revendication 1, caractérisé en ce que la valeur du couple est déduite de la valeur de rotation instantanée et de la tension de fonctionnement du moteur.

3. Circuit selon l'une des revendications 1 ou 2, caractérisé en ce qu'on augmente la valeur limite en cas de forte réduction de la tension du réseau embarqué.
